# EUROPEAN PATENT SPECIFICATION

(11) **EP 4 017 141 B1**
(45) Date of publication and mention of the grant of the patent: **14.10.2026**
(21) Application number: 19941257.8
(22) Date of filing: 15.08.2019
(51) Int. Cl.: H04W 52/36, H04W 52/42, H04W 52/14

(54) **TERMINAL AND TERMINAL COMMUNICATION METHOD**
ENDGERÄT UND ENDGERÄTE-KOMMUNIKATIONSVERFAHREN
TERMINAL ET PROCÉDÉ DE COMMUNICATION DE TERMINAL

(43) Date of publication of application: 22.06.2022
(60) Divisional application: 23184931.6 / 4 240 069
(73) Proprietor: NTT DOCOMO, INC., Chiyoda-Ku Tokyo 100-6150 (JP)
(72) Inventor: UMEDA, Hiromasa, Tokyo 100-6150 (JP); TAKAHASHI, Hideaki, Tokyo 100-6150 (JP); OGUMA, Yuta, Tokyo 100-6150 (JP)
(74) Representative: Hoffmann Eitle
(86) International application number: PCT/JP2019/032083
(87) International publication number: WO 2021/029082

(56) References cited:
- JP-A- 2015 146 510
- ERICSSON: "Increasing the configured EN-DC power for FDD-TDD PC3", vol. TSG RAN, no. Reno, NV; 20190513 - 20190517, 3 May 2019 (2019-05-03), XP051716269, Retrieved from the Internet <URL:http://www.3gpp.org/ftp/tsg%5Fran/WG4%5FRadio/TSGR4%5F91/Docs/R4%2D1906273%2Ezip> [retrieved on 20190503]
- HUAWEI ET AL.: "Draft CR for 38.101-1: Rx requirement for CA", 3GPP TSG RAN WG4 #91 R4-1906139, 3 May 2019 (2019-05-03), XP051716141, Retrieved from the Internet <URL:http://www.3gpp.org/ftp/tsg%5Fran/WG4%5FRadio/TSGR4%5F91/Docs/R4%2D1906139%2Ezip>

## Description

### Technical Field

The present disclosure relates to a terminal and a communication method for a terminal.

### Background Art

3GPP specifies a High Power UE (which may be referred to as "HPUE" hereinafter) for a Single band of an LTE TDD band or an NR TDD band. 3GPP also specifies the HPUE for Intra band EN-DC (which may be referred to as "EN-DC" hereinafter) of the TDD bands. Note that 3GPP is an abbreviation for Third Generation Partnership Project. LTE is an abbreviation for Long Term Evolution. TDD is an abbreviation for Time Division Duplex. NR is an abbreviation for New Radio. EN-DC is an abbreviation for Evolved Universal Terrestrial Radio Access (E-UTRA)-NR Dual Connectivity.

In Release 15 of 3GPP, for example, a maximum transmit power (maximum output power) of 26 dBm is specified for the HPUE of Power Class 2 (PC2). A maximum transmit power of 23 dBm is specified for the HPUE of Power Class 3 (PC3). In an LTE/NR FDD band, Power Class 1 (PC1) (maximum transmit power of 31 dBm) is specified under the assumption of a UE with a large housing. Note that, specifications for the HPUE are currently under consideration in Non-Patent Literatures (hereinafter, referred to as "NPLs") 1 and 2).

In the Single band or EN-DC, a Specific Absorption Rate (SAR) or a problem of heat generation of the HPUE is taken into account, and the HPUE signals, as HPUE capability, information indicating whether or not an uplink transmission at a maximum transmit power of 26 dBm is possible and information indicating the frequency of uplink transmissions (UplinkDutycycle), for example. For example, a Single band HPUE signals using Per band that the uplink transmission at 26 dBm is possible (that the Single band HPUE is capable of supporting PC2), and the maximum UplinkDutycycle which can be supported as PC2.

Note that the HPUE does not signal the UplinkDutycycle when a default value is used for the UplinkDutycycle. In the following, the UplinkDutycycle signaled by the HPUE may be referred to as "maxUplinkDutycycle." An NW may be configured by a base station or a server. The NW may include a radio access network, a core network, and a public network such as the Internet.

The HPUE falls back in terms of the maximum transmit power when the UplinkDutycycle of the uplink transmission exceeds the maxUplinkDutycycle or the default UplinkDutycycle (see, for example, NPLs 3 and 4). For example, the HPUE of PC2 with a maximum transmit power of 26 dBm falls back to PC3 with a maximum transmit power of 23 dBm when the UplinkDutycycle of the uplink transmission exceeds the maxUplinkDutycycle or the default UplinkDutycycle. That is, the HPUE of PC2 in NPLs 3 and 4 reduces the maximum transmit power by a certain value (3 dB) when the UplinkDutycycle of the uplink transmission exceeds the maxUplinkDutycycle or the default UplinkDutycycle.

In NPL 5, it is proposed to configure reduction amount ΔP_{PowerClass} of the maximum transmit power in the range of [0, 3] dB.

ERICSSON: "Increasing the configured EN-DC power for FDD-TDD PC3", 3GPP DRAFT; R4-1906273, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. TSG RAN, no. Reno, NV; 20190513 - 20190517, 3 May 2019, discloses techniques for increasing the configured EN-DC power for FDD-TDD PC3.

HUAWEI et al.: "Draft CR for 38.101-1 : Rx requirement for CA", 3GPP TSG RAN WG4 #91 R4-1906139, 3 May 2019, discloses techniques for setting the bounds for the configured maximum output power for a UE performing UL transmission.

### Citation List

### Non-Patent Literature

NPL 1
   RP-190315 "High power UE (power class 2) for EN-DC (1 LTE TDD band + 1 NR TDD band)", March 18-21, 2019
NPL 2
   RP-191439 "Study on high power UE (power class 2) for EN-DC (1 LTE FDD band + 1 NR TDD band)", June 3-6 2019
NPL 3
   3GPP TS 38.101-1 V16.0.0, "NR User Equipment (UE) radio transmission and reception Part 1 Range 1 Standalone (Release 16)", June 2019
NPL 4
   3GPP TS 38.101-1 V16.0.0, "NR User Equipment (UE) radio transmission and reception Part 3: Range 1 and Range 2 Interworking operation with other radios (Release 16)", June 2019
NPL 5
   R4-1906139, "Draft CR for 38.101-1: Rx requirement for CA", May 13-17, 2019

### Summary of Invention

### Technical Problem

However, NPL 5 does not describe any method for the NW to grasp the reduction amount of the maximum transmit power of the terminal. If the NW schedules an uplink transmission of the terminal without grasping the maximum transmit power of the terminal, the scheduling performance for the uplink transmission may be degraded.

One object of the present disclosure is to improve the scheduling performance for the uplink transmission.

### Solution to Problem

The invention is set out in the appended set of claims.

### Advantageous Effects of Invention

According to the present disclosure, it is possible to improve the scheduling performance for the uplink transmission.

### Brief Description of Drawings

FIG. 1 is an explanatory view for explaining exemplary fallback of a terminal;
FIG. 2 illustrates an exemplary configuration of a radio communication system according to Embodiment 1;
FIG. 3 is a block diagram illustrating an exemplary configuration of terminal 1;
FIG. 4 is a block diagram illustrating an exemplary configuration of base station 2;
FIG. 5 is an explanatory view for explaining exemplary determination of maximum transmit power according to Embodiment 1;
FIG. 6A illustrates an exemplary process of the radio communication system according to Embodiment 1;
FIG. 6B illustrates the exemplary process of the radio communication system according to Embodiment 1;
FIG. 6C illustrates the exemplary process of the radio communication system according to Embodiment 1;
FIG. 6D illustrates the exemplary process of the radio communication system according to Embodiment 1;
FIG. 7 is an explanatory view for explaining exemplary determination of maximum transmit power according to Embodiment 2;
FIG. 8A illustrates an exemplary process of the radio communication system according to Embodiment 2;
FIG. 8B illustrates the exemplary process of the radio communication system according to Embodiment 2;
FIG. 8C illustrates the exemplary process of the radio communication system according to Embodiment 2;
FIG. 8D illustrates the exemplary process of the radio communication system according to Embodiment 2;
FIG. 9 is an explanatory view for explaining exemplary determination of maximum transmit power according to Embodiment 3;
FIG. 10A illustrates an exemplary process of the radio communication system according to Embodiment 3;
FIG. 10B illustrates the exemplary process of the radio communication system according to Embodiment 3;
FIG. 10C illustrates the exemplary process of the radio communication system according to Embodiment 3;
FIG. 10D illustrates the exemplary process of the radio communication system according to Embodiment 3; and
FIG. 11 illustrates an exemplary hardware configuration of terminal 1 and base station 2.

### Description of Embodiment

Embodiments of the invention will be described in detail below with appropriate reference to the accompanying drawings. However, any unnecessarily detailed description may be omitted. For example, any detailed description of well-known matters and redundant descriptions on substantially the same configurations may be omitted. This is to avoid the unnecessary redundancy of the following description and to facilitate understanding by those skilled in the art.

It is to be noted that the accompanying drawings and the following description are provided to enable those skilled in the art to fully understand this disclosure, and are not intended to limit the claimed subject. In the description below, an HPUE may be referred to as "terminal."

### (Embodiment 1)

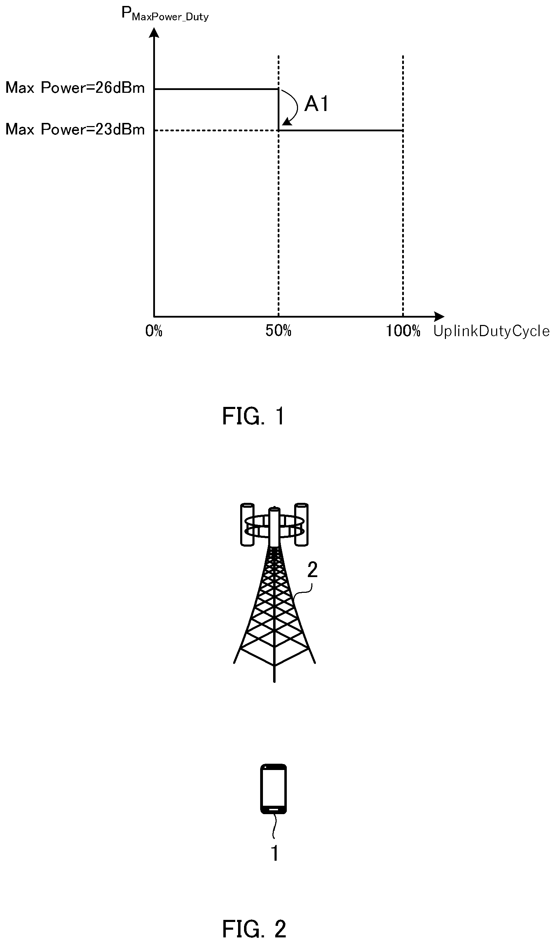

FIG. 1 is an explanatory view for explaining exemplary fallback of a terminal. In NPLs 3 and 4, for example, when the maxUplinkDutycycle of the terminal is 50%, the terminal configures a maximum transmit power of 26 dBm (about 400 mW) until the UplinkDutycycle exceeds 50%. That is, the terminal configures a maximum transmit power of 26 dBm (PC2) until the UplinkDutycycle of the uplink transmission exceeds 50%.

When the NW schedules the terminal with the uplink transmission at an UplinkDutycycle greater than 50%, the terminal falls back to PC3. For example, when the NW schedules the terminal with the uplink transmission at an UplinkDutycycle of 75%, the terminal falls back to PC3. That is, when the UplinkDutycycle is 75%, the terminal falls back to a maximum transmit power of 23 dBm (about 200 mW).

In NPLs 3 and 4, P_{PowerClass} (PC2 = 26 dBm in the above example) is used as a parameter in the equation for calculating configured power denoted by P_{CMAX}. When the UplinkDutycycle exceeds the maxUplinkDutycycle (which may be referred to as "threshold" hereinafter), the terminal subtracts ΔP_{PowerClass} = 3 dB from 26 dBm to fall back to a maximum transmit power of 23 dBm for PC3, for example, as indicated by arrow A1 in FIG. 1. In NPLs 3 and 4, even if the UplinkDutycycle slightly exceeds the threshold (for example, even if the UplinkDutycycle is 51%), the terminal falls back to a maximum transmit power of 23 dBm for PC3.

Assuming that an SAR-based influence is proportional to the transmit power of the terminal, it can be said that an uplink transmission at a transmit power of 300 mW is not problematic in the case of an UplinkDutycycle of 75%. However, in NPLs 3 and 4, since the terminal falls back to a maximum transmit power of 23 dBm, it can be said that the capability of the terminal is not fully utilized.

Contrariwise, NPL 5 proposes that when the UplinkDutycycle exceeds the threshold (maxUplinkDutycycle), the reduction amount ΔP_{PowerClass} of the maximum transmit power is configured in the range of [0, 3] dB. However, NPL 5 does not describe a method for the NW to grasp the maximum transmit power of the terminal. Thus, for example, the NW cannot grasp what ΔP_{PowerClass} is configured by the terminal in a case of a certain UplinkDutycycle. Therefore, in NPL 5, suitable uplink transmission scheduling is not possible. In addition, in NPL 5, suitable uplink transmission scheduling is not possible, so that it is difficult to effectively utilize the capability of the terminal.

FIG. 2 illustrates an exemplary configuration of a radio communication system according to Embodiment 1. As illustrated in FIG. 2, the radio communication system includes terminal 1 and base station 2.

Terminal 1 determines the maximum transmit power corresponding to the UplinkDutycycle in accordance with a certain rule when the UplinkDutycycle exceeds the threshold (maxUplinkDutycycle).

For example, suppose that the threshold of the UplinkDutycycle is 50%. When the UplinkDutycycle is 60%, terminal 1 determines the maximum transmit power corresponding to the UplinkDutycycle of 60% in accordance with a certain rule. When the UplinkDutycycle is 75%, terminal 1 also determines the maximum transmit power corresponding to the UplinkDutycycle of 75% in accordance with the certain rule.

Terminal 1 configures the maximum transmit power of the uplink transmission to the determined maximum transmit power. Terminal 1 transmits an uplink signal to base station 2 within the range of the configured maximum transmit power.

Note that terminal 1 may determine the maximum transmit power corresponding to the UplinkDutycycle in a certain cycle, for example, when the UplinkDutycycle exceeds the threshold.

When the UplinkDutycycle of terminal 1 exceeds the threshold, base station 2 determines (estimates) the maximum transmit power corresponding to the UplinkDutycycle of terminal 1 in accordance with the same rule as terminal 1. Base station 2 schedules the uplink transmission of terminal 1 based on the determined maximum transmit power. That is, when the UplinkDutycycle of terminal 1 exceeds the threshold, base station 2 grasps the maximum transmit power corresponding to the UplinkDutycycle of terminal 1 in accordance with the same rule as terminal 1, and schedules the uplink transmission of terminal 1.

Note that, terminal 1 transmits the maxUplinkDutycycle (threshold) to base station 2. Base station 2 determines, using the threshold received from terminal 1, whether or not the UplinkDutycycle of terminal 1 exceeds the threshold. It is possible for base station 2 to grasp the UplinkDutycycle of terminal 1 for scheduling the uplink transmission of terminal 1.

Although only single terminal 1 is illustrated in FIG. 2, there may also be a plurality of terminals. Thresholds of the plurality of terminals may be different or the same.

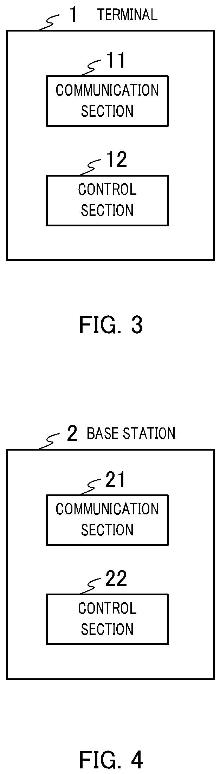

FIG. 3 is a block diagram illustrating an exemplary configuration of terminal 1. As illustrated in FIG. 3, terminal 1 includes communication section 11 and control section 12.

Communication section 11 communicates with base station 2. Communication section 11 is configured with the maximum transmit power according to the control of control section 12. Communication section 11 transmits an uplink signal to base station 2 within the range of the configured maximum transmit power.

Control section 12 controls the entire operation of terminal 1, for example. Control section 12 determines the maximum transmit power of communication section 11. Control section 12 notifies communication section 11 of the determined maximum transmit power.

FIG. 4 is a block diagram illustrating an exemplary configuration of base station 2. As illustrated in FIG. 4, base station 2 includes communication section 21 and control section 22.

Communication section 21 communicates with terminal 1. Communication section 21 transmits a scheduling result for the uplink transmission of terminal 1 to terminal 1.

Control section 22 controls, for example, the entire operation of base station 2. Control section 22 schedules the uplink transmission of terminal 1.

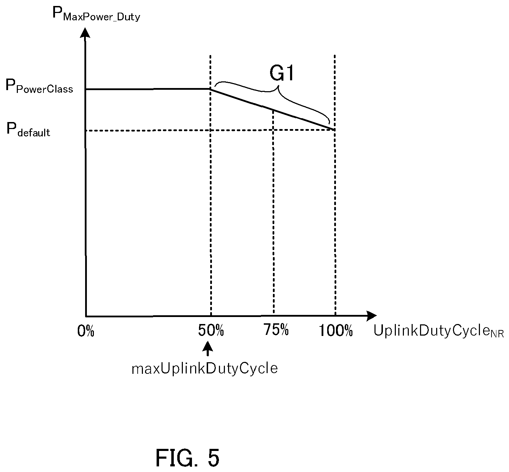

FIG. 5 is an explanatory view for explaining exemplary determination of the maximum transmit power according to Embodiment 1. In Embodiment 1, the relation between the UplinkDutycycle, on the one hand, and transmittable power (maximum transmit power) between the upper limit of Power Class (PC) (e.g., PC2) of terminal 1 and a default PC (e.g., PC3), on the other hand, is formulated.

Depending on the UplinkDutycycle, terminal 1 notifies base station 2 of information, as capability, that indicates that terminal 1 is capable of controlling the maximum transmit power.

It is assumed that when the UplinkDutycycle exceeds the maxUplinkDutycycle, the maximum transmit power and the UplinkDutycycle are proportional (linear) to each other up to a maximum transmit power of 23 dBm (UplinkDutycycle of 100%) for the default PC. The relation between the UplinkDutycycle and the maximum transmit power between the upper limit of the PC of terminal 1 and the default PC is represented by a linear function, and is expressed by Equation 1.
[1] 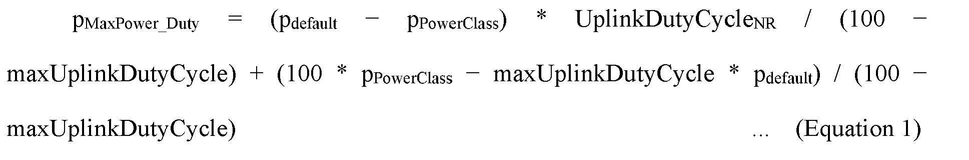 pMaxPower_Duty = (pdefault - pPowerClass) * UplinkDutyCycleNR / (100 - maxUplinkDutyCycle) + (100 * pPowerClass - maxUplinkDutyCycle * pdefault) / (100 - maxUplinkDutyCycle) (Equation 1) where
p_{MaxPower_Duty}: a linear value of a maximum transmit power of a terminal at a certain UplinkDutycycle,
p_{default}: a linear value for a Default power class (PC3 in a case of PC2),
p_{PowerClass}: a linear value for a Power Class of which a terminal notifies, and
maxUplinkDutyCycle: maxUplinkDutycycle [%] signaled by a terminal supporting PC2 (considered to be the worst at 26 dBm)

Equation 1 represents graph G1 in FIG. 5. Equation 1 indicates that when the UplinkDutycycle of terminal 1 exceeds the maxUplinkDutycycle, the maximum transmit power of terminal 1 varies according to the UplinkDutycycle scheduled by base station 2.

For example, P_{PowerClass} of terminal 1 is PC2 (the maximum transmit power is approximately 400 mW). The default PC of terminal 1 is PC3 (the maximum transmit power is approximately 200 mW). The maxUplinkDutycycle of terminal 1 is 50%. When terminal 1 is configured with a maximum transmit power of 300 mW or more, base station 2 sets the UplinkDutycycle to 75% or less.

That is, when the UplinkDutycycle of terminal 1 exceeds the maxUplinkDutycycle, base station 2 schedules the uplink transmission of terminal 1 on the assumption that terminal 1 operates in accordance with Equation 1.

As described above, terminal 1 includes: control section 12 that, when the UplinkDutycycle exceeds the maxUplinkDutycycle, determines the maximum transmit power corresponding to the UplinkDutycycle in accordance with a certain rule; and communication section 11 that is configured with the maximum transmit power and performs an uplink transmission. The certain rule is, for example, a linear function in which the UplinkDutycycle exceeding the maxUplinkDutycycle is associated with the maximum transmit power.

This configuration makes it possible for base station 2 to improve the scheduling performance for the uplink transmission. For example, base station 2 can grasp the maximum transmit power of terminal 1 in accordance with the same rule as terminal 1, and can schedule the uplink transmission of terminal 1 based on the grasped maximum transmit power of terminal 1.

In addition, the improvement in scheduling performance for the uplink transmission makes it possible for terminal 1 to effectively utilize the capability for the uplink transmission.

Note that, the information on P_{PowerClass} and the maxUplinkDutycycle of terminal 1 may be attached to the capability of terminal 1 (enhancedHighPowerUE) and signaled.

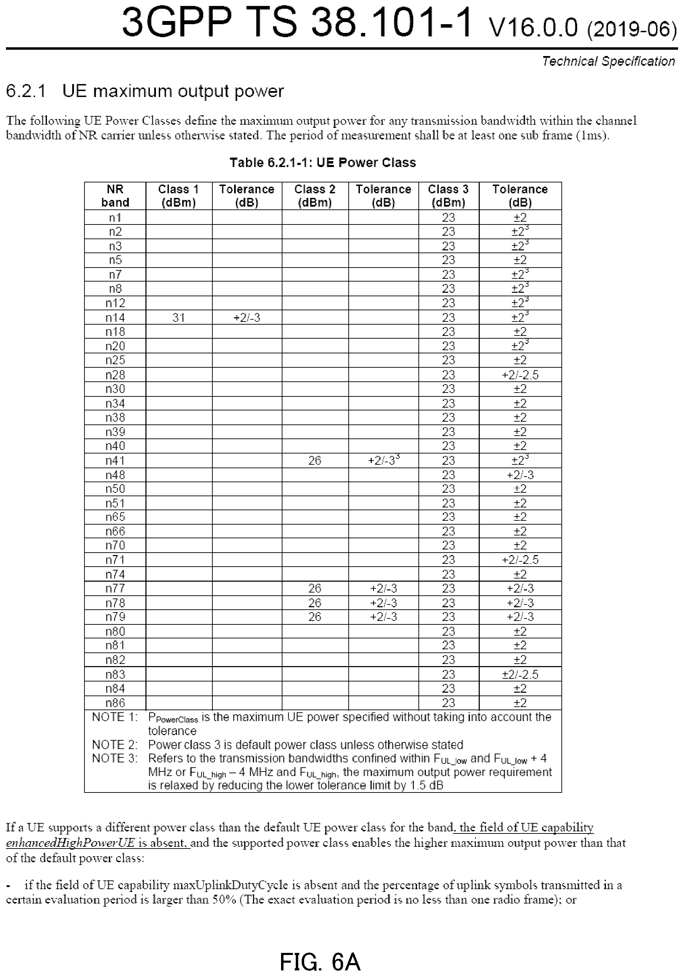

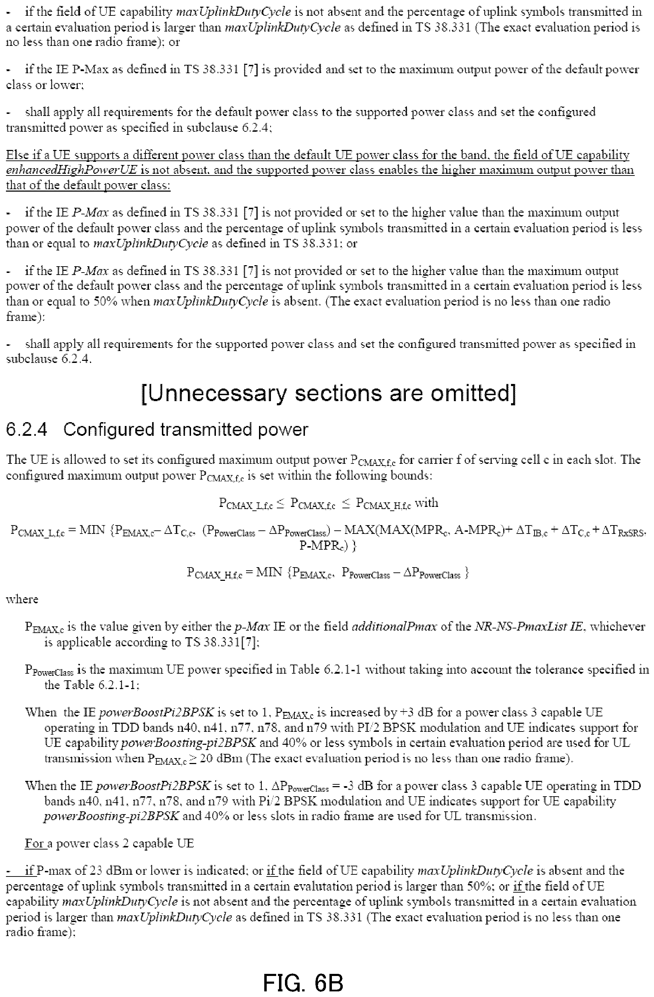

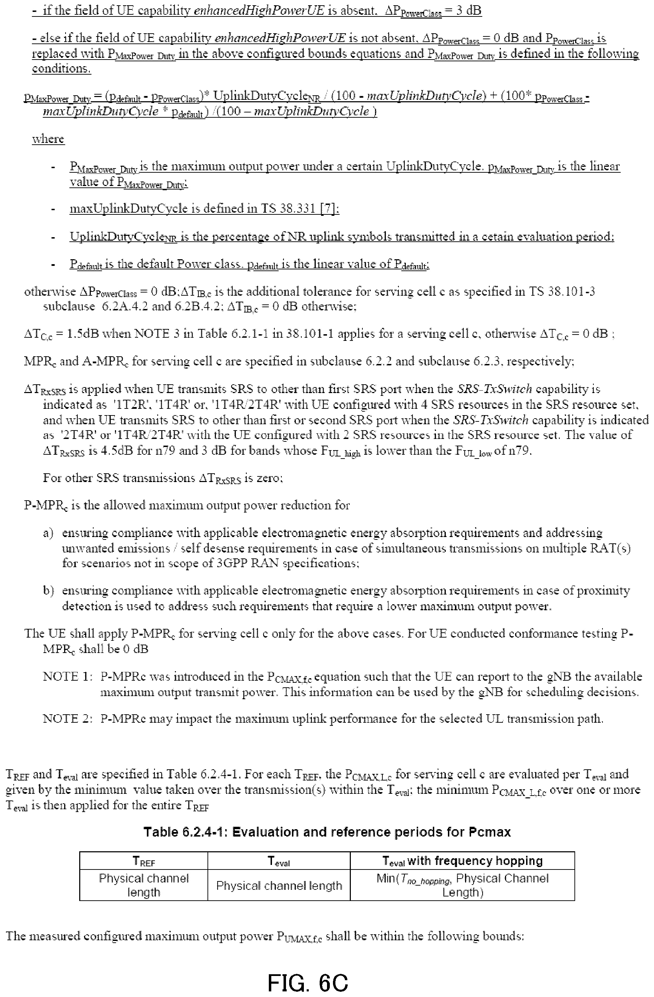

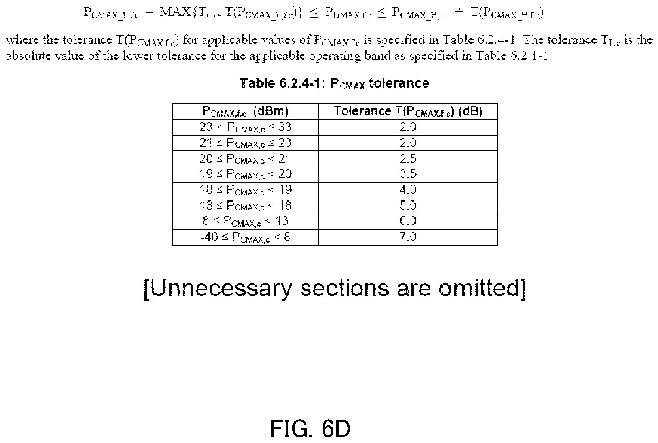

The process of the radio communication system according to Embodiment 1 may be realized by the process illustrated in FIGS. 6A to 6D.

### (Embodiment 2)

Embodiment 2 differs from Embodiment 1 in the equation for determining the maximum transmit power. Hereinafter, differences between Embodiment 2 and Embodiment 1 will be described.

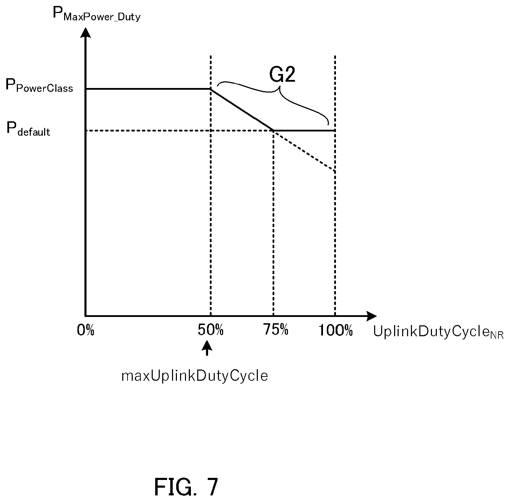

FIG. 7 is an explanatory view for explaining exemplary determination of the maximum transmit power according to Embodiment 2. It is assumed that when the UplinkDutycycle exceeds the maxUplinkDutycycle, the maximum transmit power and the UplinkDutycycle are proportional (linear) to each other up to a maximum transmit power of 23 dBm for the default PC. The relation between the UplinkDutycycle and the maximum transmit power between the upper limit of the PC of terminal 1 and the default PC is indicated by Equation 2.
[2] 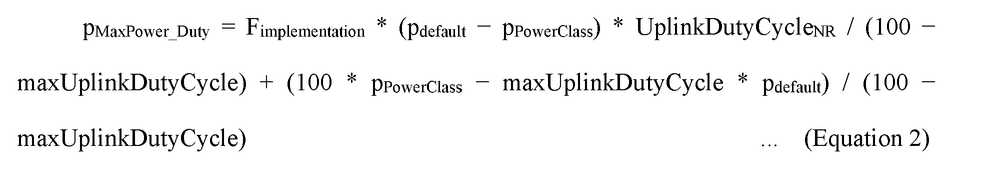 pMaxPower_Duty = Fimplementation * (pdefault - pPowerClass) * UplinkDutyCycleNR / (100 - maxUplinkDutyCycle) + (100 * pPowerClass - maxUplinkDutyCycle * pdefault) / (100 - maxUplinkDutyCycle) (Equation 2) where
p_{MaxPower_Duty}: a linear value of a maximum transmit power of a terminal at a certain UplinkDutycycle,
p_{default}: a linear value for a Default power class (PC3 in a case of PC2),
p_{PowerClass}: a linear value for a Power Class of which a terminal notifies,
maxUplinkDutyCycle: maxUplinkDutycycle [%] signaled by a terminal supporting PC2 (considered to be the worst at 26 dBm), and
Fᵢₘₚₗₑₘₑₙₜₐₜᵢₒₙ: a factor for providing an implementation margin

Equation 2 represents graph G2 in FIG. 7. When F_{Implementation} = 1.5, the maximum transmit power is 23 dBm at an UplinkDutycycle of 75%. That is, when Fᵢₘₚₗₑₘₑₙₜₐₜᵢₒₙ > 1, the maximum transmit power at a certain UplinkDutycycle in Equation 2 is less than the maximum transmit power at the certain UplinkDutycycle in Equation 1. Therefore, in implementation of the maximum transmit power, terminal 1 provides a greater margin in comparison with Equation 1 when Fᵢₘₚₗₑₘₑₙₜₐₜᵢₒₙ > 1.

Fᵢₘₚₗₑₘₑₙₜₐₜᵢₒₙ may be a fixed value or may be signaled by the terminal. When signaled, Fᵢₘₚₗₑₘₑₙₜₐₜᵢₒₙ may be signaled after attached to the capability (enhancedHighPowerUE) planned to be signaled in accordance with Equation 1, or may be signaled as another capability.

In Equation 2, the slope of Equation 1 is multiplied by Fᵢₘₚₗₑₘₑₙₜₐₜᵢₒₙ. Equation 2 is equivalent to Equation 1 when Fᵢₘₚₗₑₘₑₙₜₐₜᵢₒₙ = 1. Equation 2 can be interpreted to encompass Equation 1.

Terminal 1 may be configured with Fᵢₘₚₗₑₘₑₙₜₐₜᵢₒₙ > 1, for example, when the SAR is not solved in proportion to the UplinkDutycycle. When Fᵢₘₚₗₑₘₑₙₜₐₜᵢₒₙ > 1, the maximum transmit power of terminal 1 is smaller than the maximum transmit power obtained in Equation 1, so that the SAR may be solved.

As described above, control section 12 determines the maximum transmit power in accordance with the function that multiplies the slope of the linear function by the factor Fimplementation.

This configuration makes it possible for base station 2 to improve the scheduling performance for the uplink transmission. For example, base station 2 can grasp the maximum transmit power of terminal 1 in accordance with the same rule as terminal 1, and can schedule the uplink transmission of terminal 1 based on the grasped maximum transmit power of terminal 1.

In addition, the improvement in scheduling performance for the uplink transmission makes it possible for terminal 1 to effectively utilize the capability for the uplink transmission.

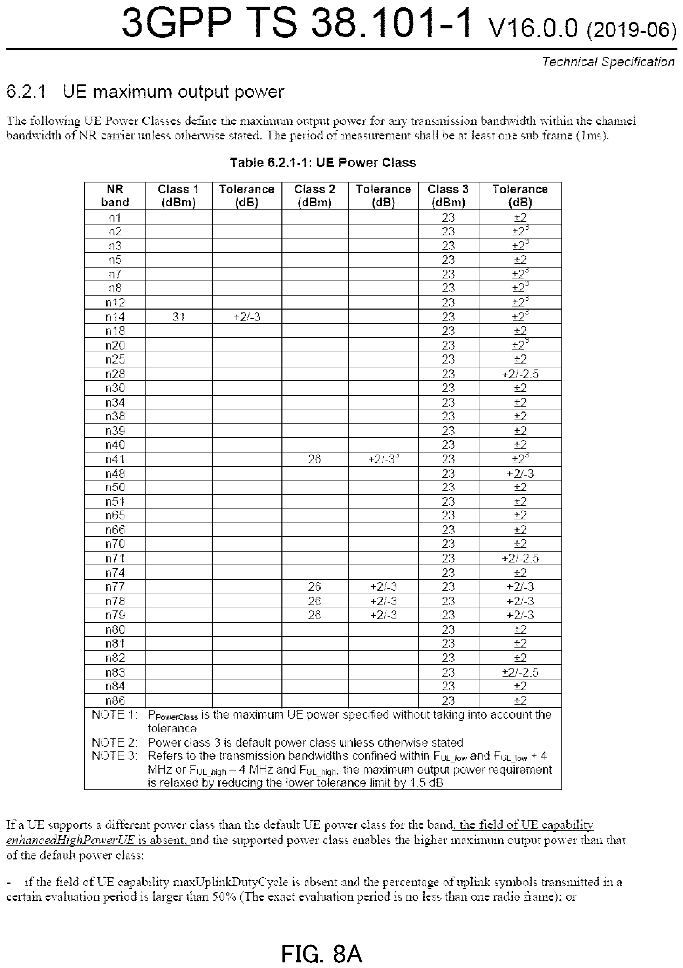

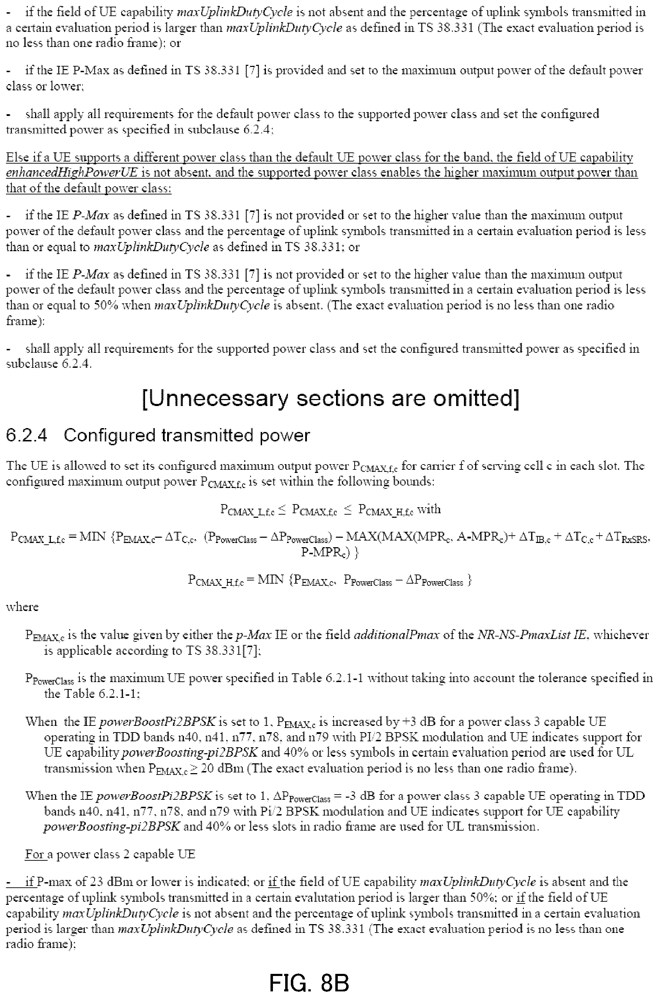

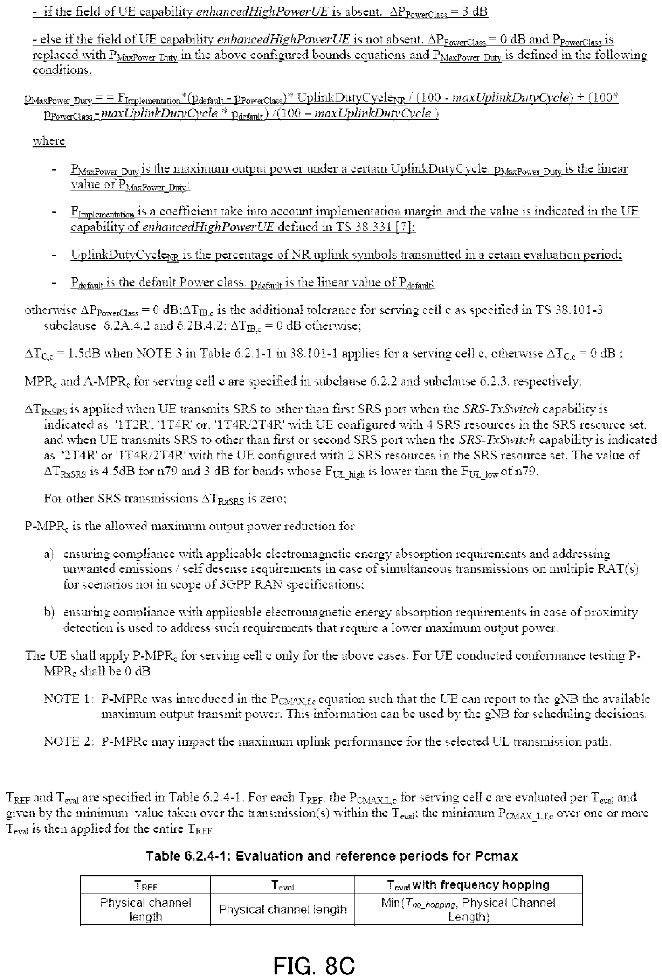

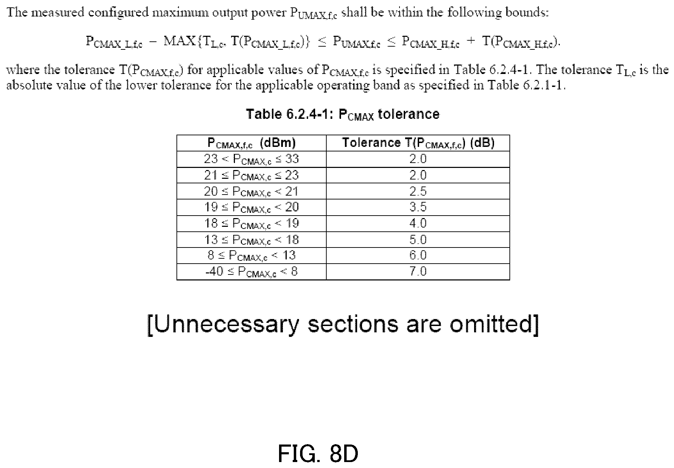

Note that, the process of the radio communication system according to Embodiment 2 may be realized by the process illustrated in FIGS. 8A to 8D.

### (Embodiment 3, not in accordance with the claims)

Embodiment 3 differs from Embodiments 1 and 2 in the equation for determining the maximum transmit power. Hereinafter, differences between Embodiment 3 and Embodiments 1 and 2 will be described.

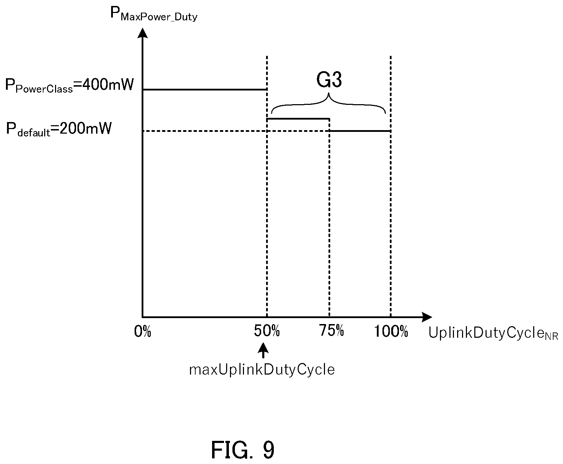

FIG. 9 is an explanatory view for explaining exemplary determination of the maximum transmit power according to Embodiment 3. The relation between the UplinkDutycycle and the maximum transmit power between the upper limit of the PC of terminal 1 and the default PC is indicated by Equations 3a to 3c.
[3] 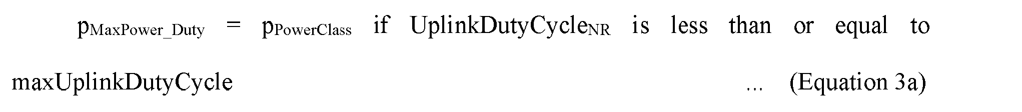 pMaxPower_Duty = pPowerClass if UplinkDutyCycleNR is less than or equal to maxUplinkDutyCycle (Equation 3a) 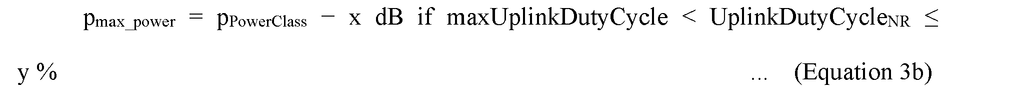 pmax_power = PPowerClass - x dB if maxUplinkDutyCycle < UplinkDutyCycleNR ≤ y% (Equation 3b) ${p}_{max_power} = {p}_{default} if {UplinkDutyCycle}_{NR} > y %$ (Equation 3c) where
p_{MaxPower_Duty}: a linear value of a maximum transmit power of a terminal at a certain UplinkDutycycle, and
p_{default}: a linear value for a Default power class (PC3 in a case of PC2)

Equations 3a to 3c represent graph G3 in FIG. 9. The relation between the UplinkDutycycle and the maximum transmit power between the upper limit of the PC of terminal 1 and the default PC is represented by a step function. Graph G3 of FIG. 9 shows an example in which x = 2 and y = 75%. In graph G3, the maximum transmit power is 250 mW up to an UplinkDutycycle of75%.

The x and y included in Equations 3a, 3b, or 3c may be fixed values, or terminal 1 may signal information indicating a set of x and y.

For example, the information indicating the set of (x, y) = (1.5 dB, 75%) may be "1," and the information indicating the set of (x, y) = (2 dB, 80%) may be "2." The numerals "1" and "2" may be indicated by bits. Base station 2 may have a table in which "1" is associated with (1.5 dB, 75%), and "2" is associated with (2 dB, 80%). Base station 2 may refer to the table based on the information of "1" or "2" received from terminal 1 to obtain the values of x and y.

Terminal 1 may signal x and y separately.

For signaling, an option may be specified in the capability planned to be signaled in accordance with Equation 1, and x and y may be signaled using the option.

The number of steps is not limited to two illustrated in FIG. 9. The number of steps may be three or more. For example, the number of steps may be increased using a plurality of thresholds (x, y).

As described above, control section 12 determines the maximum transmit power in accordance with the step function in which the UplinkDutycycle exceeding the maxUplinkDutycycle is associated with the maximum transmit power.

This configuration makes it possible for base station 2 to improve the scheduling performance for the uplink transmission. For example, base station 2 can grasp the maximum transmit power of terminal 1 in accordance with the same rule as terminal 1, and can schedule the uplink transmission of terminal 1 based on the grasped maximum transmit power of terminal 1.

In addition, the improvement in scheduling performance for the uplink transmission makes it possible for terminal 1 to effectively utilize the capability for the uplink transmission.

Note that, the information on x and y may be attached to the capability (enhancedHighPowerUE) of terminal 1 and signaled.

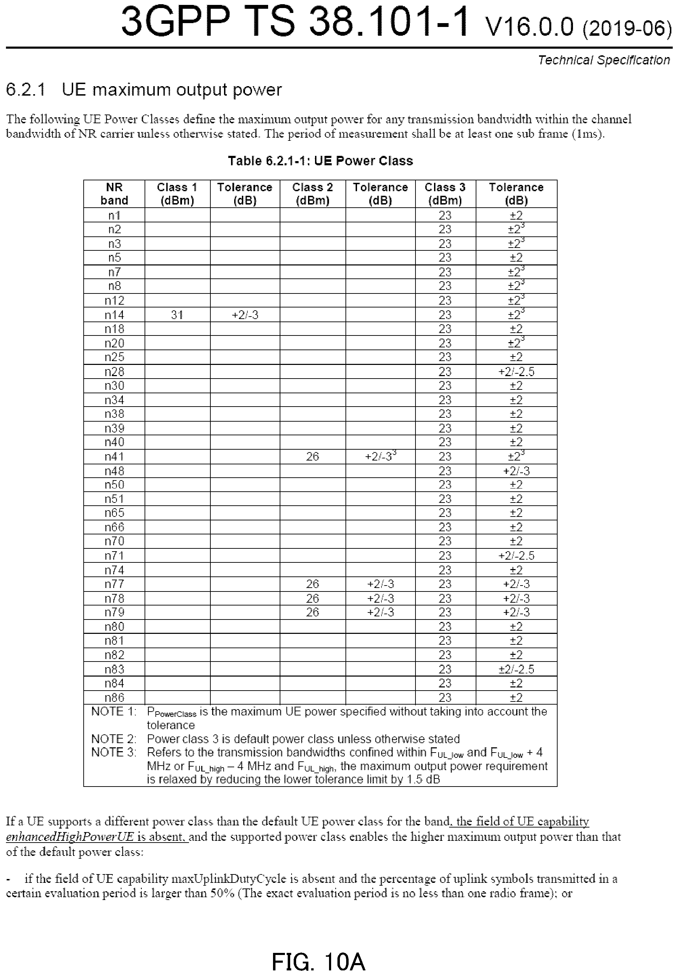

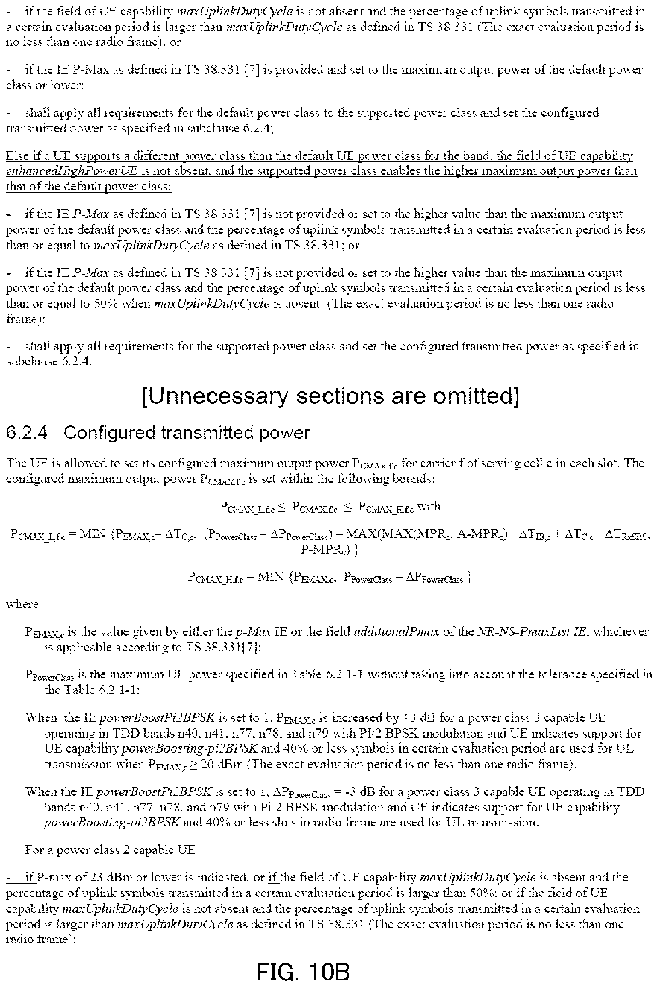

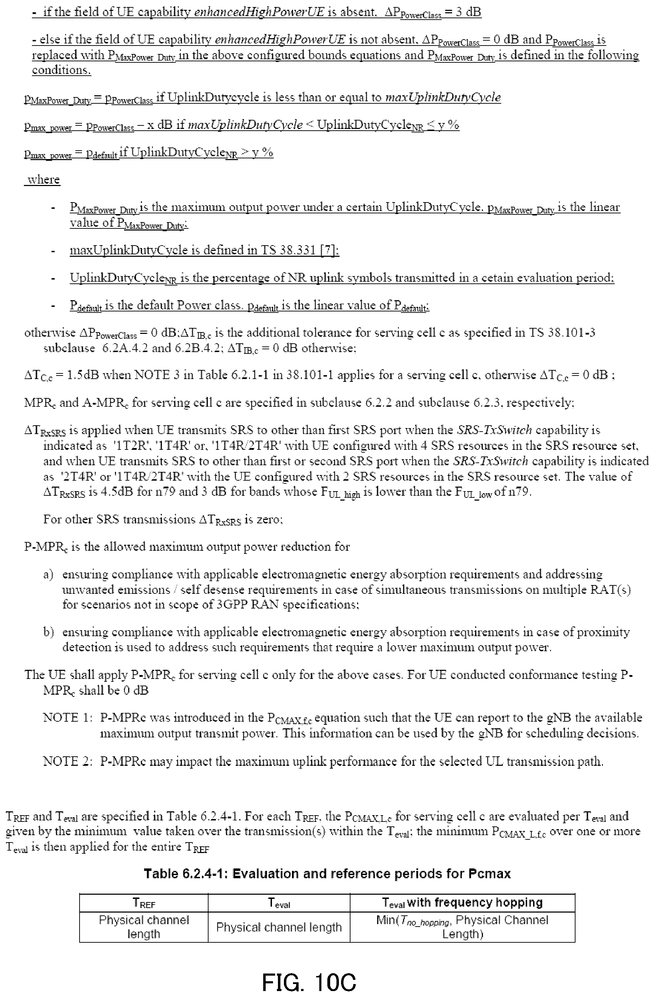

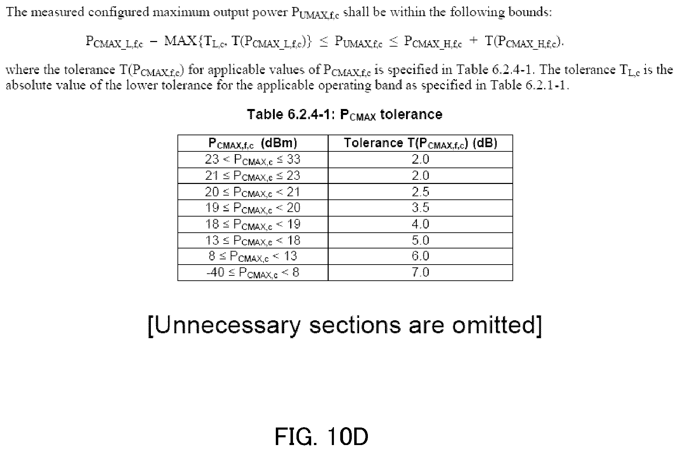

The process of the radio communication system according to Embodiment 3 may be realized by the process illustrated in FIGS. 10A to 10D.

The present disclosure has been described above.

The present disclosure is applicable to, but not limited to, Radio Access Technology (RAT), Frequency Division Duplex (FDD), TDD, and PC, and the present disclosure is applicable for many purposes.

For example, the present disclosure is applicable to carrier aggregation (CA) regardless of whether CA is Inter-band CA or intra-band CA. For example, the present disclosure is applicable to CA between LTE FDD and LTE FDD in LTE CA. The present disclosure is applicable to CA between LTE FDD and LTE TDD in LTE CA. The present disclosure is applicable to CA between LTE TDD and LTE TDD in LTE CA. The present disclosure is applicable to CA between NR FDD and NR FDD in NR CA. The present disclosure is applicable to CA between NR FDD and NR TDD in NR CA. The present disclosure is applicable to CA between NR TDD and NR TDD in NR CA.

The present disclosure is also applicable to Dual Connectivity (DC) regardless of whether DC is Inter-band DC or intra-band DC. For example, the present disclosure is applicable to DC between LTE FDD and LTE FDD in LTE DC. The present disclosure is applicable to DC between LTE FDD and LTE TDD in LTE DC. The present disclosure is applicable to DC between LTE TDD and LTE TDD in LTE DC. The present disclosure is applicable to DC between NR FDD and NR FDD in NR DC. The present disclosure is applicable to DC between NR FDD and NR TDD in NR DC. The present disclosure is applicable to DC between NR TDD and NR TDD in NR DC. The present disclosure is applicable to DC between LTE FDD and NR FDD in DC (EN-DC) between LTE and NR. The present disclosure is applicable to DC between LTE FDD and NR TDD in EN-DC. The present disclosure is applicable to DC between LTE TDD and NR TDD in EN-DC. The present disclosure is applicable to DC between LTE TDD and NR FDD in EN-DC.

The present disclosure is also applicable to PCx (e.g., 29 dBm or the like) in addition to PC2.

In the above-described embodiments, the default PC is PC3, but the default PC is not limited thereto.

In the present disclosure, terminal 1 may set, as ΔP_{PowerClass}, a value obtained by subtracting the maximum transmit power determined in accordance with Equation 1 from the power for the PC of which the terminal 1 notifies the NW (base station 2). For example, terminal 1 may calculate ΔP_{PowerClass} using Equation 4. 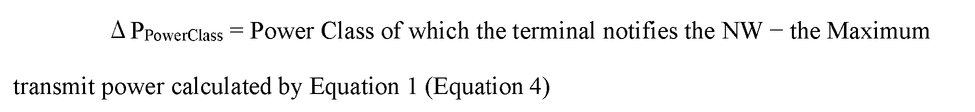 Δ PPowerClass = Power Class of which the terminal notifies the NW - the Maximum transmit power calculated by Equation 1 (Equation 4)

The radio communication systems is thus capable of reusing ΔP_{PowerClass}.

Note that, the NW also can calculate ΔP_{PowerClass} in the same manner. Note also that, although the exemplary calculation of ΔP_{PowerClass} in Equation 1 has been described above, the same applies to Equations 2 and 3.

The above embodiments may be combined with one another. For example, Embodiment 1 and Embodiment 3 may be combined with each other. For example, terminal 1 may configure the maximum transmit power using the linear function (Embodiment 1) up to a certain UplinkDutycycle when the UplinkDutycycle exceeds the threshold, and may configure the maximum transmit power using the step function (Embodiment 3) at the certain UplinkDutycycle or above. Similarly, Embodiment 1 and Embodiment 3 may be combined with each other.

### <Hardware Configuration and/or the like>

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

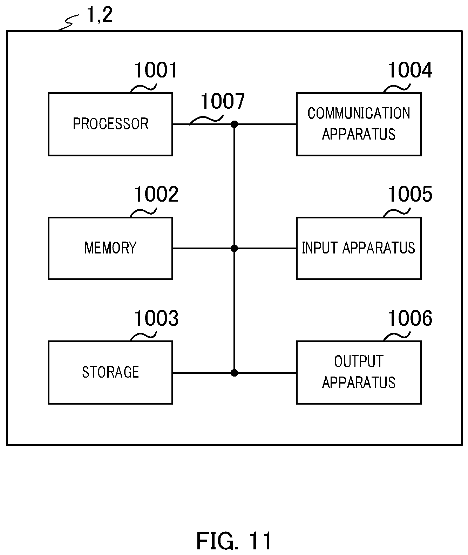

For example, the terminal, base station, and the like according to the embodiments of the present disclosure may function as a computer that executes processing of a radio communication method of the present disclosure. FIG. 11 illustrates an exemplary hardware configuration of terminal 1 and base station 2. Physically, terminal 1 and base station 2 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configuration of terminal 1 and base station 2 may include one apparatus or a plurality of apparatuses illustrated in the drawings or may not include part of the apparatuses.

The functions of terminal 1 and base station 2 are implemented using predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control sections 12 and 22 and the like as described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 12 of terminal 1 and control section 22 of base station 2 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, communication section 11 of terminal 1 and communication section 21 of base station 2 may be implemented using communication apparatus 1004. Communication sections 11 and 21 may be implemented using a transmission section and a reception section physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, terminal 1 and base station 2 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification and Signaling of Information>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The aspects and embodiments described in the present specification may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a user equipment in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "wireless base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user equipment. For example, the aspects and the embodiments of the present disclosure may find application in a configuration that results from replacing communication between the base station and the user equipment with communication between multiple user equipments (such communication may, e.g., be referred to as device-to-device (D2D), vehicle-to-everything (V2X), or the like). In this case, the user equipment may be configured to have the functions that the base station described above has. The wordings "uplink" and "downlink" may be replaced with a corresponding wording for inter-equipment communication (for example, "side"). For example, an uplink channel, a downlink channel, and the like may be replaced with a side channel.

Similarly, the user equipment in the present disclosure may be replaced with the base station. In this case, the base station may be configured to have the functions that the user equipment described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that are used in each user equipment) on the basis of TTI to each user equipment. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

One aspect of the present disclosure is useful for radio communication systems.

### Reference Signs List

1 Terminal
2 Base station
11, 21 Communication section
12, 22 Control section
1001 Processor
1002 Memory
1003 Storage
1004 Communication apparatus
1005 Input apparatus
1006 Output apparatus

## Claims

1. A terminal (1), comprising:
a control section (12) configured to determine a maximum transmit power corresponding to an UplinkDutycycle in accordance with a certain rule when the UplinkDutycycle exceeds a maxUplinkDutycycle,
wherein the certain rule is a linear function in which the UplinkDutycycle exceeding the maxUplinkDutycycle is proportional to the maximum transmit power,
wherein the control section (12) is configured to determine the maximum transmit power in accordance with a function that multiplies a slope of the linear function by a factor; and
a communication section (11) configured to perform an uplink transmission based on the maximum transmit power.

2. A communication method for a terminal (1), comprising:
determining a maximum transmit power corresponding to an UplinkDutycycle in accordance with a certain rule when the UplinkDutycycle exceeds a maxUplinkDutycycle;
wherein the certain rule is a linear function in which the UplinkDutycycle exceeding the maxUplinkDutycycle is proportional to the maximum transmit power,
determining the maximum transmit power in accordance with a function that multiplies a slope of the linear function by a factor; and
performing an uplink transmission based on the maximum transmit power.

## Patentansprüche

1. Endgerät (1), umfassend:
einen Steuerabschnitt (12), der dazu ausgebildet ist, eine maximale Sendeleistung zu bestimmen, die einem UplinkDutycycle gemäß einer bestimmten Regel entspricht, wenn der UplinkDutycycle einen maxUplinkDutycycle überschreitet,
wobei die bestimmte Regel eine lineare Funktion ist, in der der den maxUplinkDutycycle überschreitende UplinkDutycycle proportional zu der maximalen Sendeleistung ist,
wobei der Steuerabschnitt (12) dazu ausgebildet ist, die maximale Sendeleistung gemäß einer Funktion zu bestimmen, die eine Steigung der linearen Funktion mit einem Faktor multipliziert; und
einen Kommunikationsabschnitt (11), der dazu ausgebildet ist, eine Uplink-Übertragung basierend auf der maximalen Sendeleistung durchzuführen.

2. Kommunikationsverfahren für ein Endgerät (1), umfassend:
Bestimmen einer maximalen Sendeleistung, die einem UplinkDutycycle gemäß einer bestimmten Regel entspricht, wenn der UplinkDutycycle einen maxUplinkDutycycle überschreitet;
wobei die bestimmte Regel eine lineare Funktion ist, in der der den maxUplinkDutycycle überschreitende UplinkDutycycle proportional zu der maximalen Sendeleistung ist,
Bestimmen der maximalen Sendeleistung gemäß einer Funktion, die eine Steigung der linearen Funktion mit einem Faktor multipliziert; und
Durchführen einer Uplink-Übertragung, basierend auf der maximalen Sendeleistung.

## Revendications

1. Terminal (1), comprenant :
une section de commande (12) configurée pour déterminer une puissance de transmission maximale correspondant à un cycle de service de liaison montante, UplinkDutycycle, conformément à une certaine règle lorsque le cycle de service de liaison montante dépasse un cycle de service de liaison montante maximal, maxUplinkDutycycle,
dans lequel la certaine règle est une fonction linéaire dans laquelle le cycle de service de liaison montante dépassant le cycle de service de liaison montante maximal est proportionnel à la puissance de transmission maximale,
dans lequel la section de commande (12) est configurée pour déterminer la puissance de transmission maximale conformément à une fonction qui multiplie une pente de la fonction linéaire par un facteur ; et
une section de communication (11) configurée pour effectuer une transmission de liaison montante sur la base de la puissance de transmission maximale.

2. Procédé de communication pour un terminal (1), comprenant :
le fait de déterminer une puissance de transmission maximale correspondant à un cycle de service de liaison montante conformément à une certaine règle lorsque le cycle de service de liaison montante dépasse un cycle de service de liaison montante maximal ;
dans lequel la certaine règle est une fonction linéaire dans laquelle le cycle de service de liaison montante dépassant le cycle de service de liaison montante maximal est proportionnel à la puissance de transmission maximale,
le fait de déterminer la puissance de transmission maximale conformément à une fonction qui multiplie une pente de la fonction linéaire par un facteur ; et
le fait d'effectuer une transmission de liaison montante sur la base de la puissance de transmission maximale.
